# FASCICULE DE BREVET EUROPEEN

(11) **EP 3 489 854 B1**
(45) Date de publication et mention de la délivrance du brevet: **19.10.2022**
(21) Numéro de dépôt: 18208672.8
(22) Date de dépôt: 27.11.2018
(51) Int. Cl.: G06F 21/73, G06F 21/44, H04L 9/40

(54) **PROCÉDÉ D'INSCRIPTION SÉCURISÉE D'UN APPAREIL ÉLECTRIQUE AMOVIBLE LORS DE SON INSTALLATION AU SEIN D'UN SYSTÈME ÉLECTRIQUE**
GESICHERTES ANMELDEVERFAHREN EINES ENTFERNBAREN ELEKTRISCHEN GERÄTS BEI SEINEM EINBAU IN EIN ELEKTRISCHES SYSTEM
METHOD FOR SECURELY INPUTTING A REMOVABLE ELECTRICAL APPARATUS DURING INSTALLATION IN AN ELECTRICAL SYSTEM

(30) Priorité: 28.11.2017 FR 1761258
(43) Date de publication de la demande: 29.05.2019
(73) Titulaire: Schneider Electric Industries SAS, 92500 Rueil Malmaison (FR)
(72) Inventeur: MOULIN, Michel, 38050 GRENOBLE Cedex 09 (FR)
(74) Mandataire: Lavoix

(56) Documents cités:
- WO-A1-02/065696
- US-A1- 2013 318 343
- US-B1- 6 233 685
- US-B1- 6 820 157

## Description

La présente invention concerne un procédé d'inscription sécurisée d'un appareil électrique amovible lors de son installation au sein d'un système électrique en remplacement d'un appareil électrique amovible défaillant.

L'invention concerne notamment le domaine des appareils de commutation électrique et/ou de protection électrique équipés d'un calculateur électroniques embarqué.

De façon connue, de nombreux appareils électriques de commutation et/ou de protection électrique, tels que des disjoncteurs, des contacteurs, ou des appareils de mesure et de supervision, sont pourvus d'un calculateur électronique qui permet d'assurer des fonctions de commande et de gestion à distance. De tels appareils sont dits « communicants ».

Ces appareils électriques sont destinés à coopérer avec un système électrique, tel qu'un tableau électrique ou une armoire électrique, de façon à être raccordés avec une installation électrique sur laquelle ils sont destinés à agir, ainsi qu'à être connectés à un réseau de communication au sein duquel ils peuvent communiquer. De tels systèmes sont, par exemple, utilisés en milieu industriel afin de gérer l'alimentation électrique de divers appareillages au sein d'une installation industrielle.

Ces appareils électriques sont généralement connectés au système électrique de façon amovible, de manière à faciliter leur connexion et surtout leur remplacement, par exemple lors d'opérations de maintenance.

Toutefois, pour des raisons de sécurité, il est souhaitable que seuls des appareils électriques préalablement autorisés puissent être connectés au sein du système électrique. Dans le cas contraire, des appareils électriques modifiés frauduleusement pourraient être installés au sein du système, à l'insu des administrateurs du système, en vue de causer des dommages à ce système, ce qui constitue une faille de sécurité inacceptable.

Ainsi, typiquement, lorsqu'un tel appareil électrique est installé ou remplacé, il doit faire l'objet d'une inscription au sein du système électrique, avant de pouvoir être utilisé. Pour des raisons de sécurité, l'opération d'inscription doit être réalisée par une personne présentant des privilèges de sécurité spécifiques, par exemple un administrateur système.

Cependant, en pratique, l'administrateur système n'est pas toujours disponible pour procéder à l'inscription en temps utile. En effet, dans une installation industrielle, le nombre d'appareils électriques est généralement élevé et ces derniers peuvent être dispersés géographiquement sur une étendue importante. En outre, le contexte industriel exige généralement qu'en cas de défaillance, le rétablissement de l'appareil défaillant soit réalisé en un temps très court, pour ne pas pénaliser l'exploitation de l'installation industrielle. En pratique, il existe des opérateurs de maintenance qui sont susceptibles d'intervenir rapidement sur les appareils électriques en cas de défaillance, mais, là encore, pour des raisons de sécurité, il n'est pas souhaitable qu'ils puissent bénéficier des mêmes privilèges que l'administrateur système.

C'est à ces inconvénients qu'entend plus particulièrement remédier l'invention en proposant un procédé d'inscription sécurisée d'un appareil électrique amovible lors de son installation au sein d'un système électrique, dont la mise en œuvre soit facilitée sans pour autant compromettre la sécurité informatique du système. L'état de l'art comprends les documents US 2013/318343 , WO 02/065696 et US6 233685 qui visent comment ajouter un nouvel appareil à un réseaux .

A cet effet, l'invention concerne un procédé d'inscription sécurisée d'un appareil électrique amovible lors de son installation au sein d'un système électrique en remplacement d'un appareil électrique amovible défaillant, caractérisé en ce que ce procédé comporte des étapes conformément à la revendication 1.

Grâce à l'invention, l'utilisation de certificats de sécurité propres à chaque appareil amovible, associés à une autorité de certification de confiance, permet à un opérateur de maintenance chargé du remplacement d'un appareil défaillant d'inscrire l'appareil venant d'être installé en remplacement d'un appareil défaillant, sans pour autant avoir besoin de disposer de permissions de sécurité élevées. L'inscription des appareils amovibles au sein du système lors de leur remplacement s'en trouve facilité, sans pour autant compromettre la sécurité informatique de l'ensemble du système.

Selon des aspects avantageux mais non obligatoires de l'invention, un tel procédé d'inscription d'un appareil électrique amovible au sein d'un système électrique peut incorporer une ou plusieurs des caractéristiques des revendications dépendantes 2 à 7, prises isolément ou suivant toute combinaison techniquement admissible.

Selon un autre aspect, l'invention concerne un système électrique conforme à la revendication 8.

L'invention sera mieux comprise et d'autres avantages de celle-ci apparaîtront plus clairement à la lumière de la description qui va suivre, d'un mode de réalisation d'un procédé d'inscription d'un appareil électrique amovible au sein d'un système électrique donné uniquement à titre d'exemple et faite en référence aux dessins annexés dans lesquels :
- la figure 1 est une représentation schématique d'un système électrique comprenant au moins un appareil électrique amovible conforme à l'invention ;
- la figure 2 est une représentation schématique d'un calculateur électronique équipant l'appareil électrique de la figure 1 ;
- la figure 3 est un ordinogramme d'un procédé, conforme à l'invention, d'inscription sécurisée d'un appareil électrique amovible lors de son installation au sein d'un système électrique de la figure 1, en remplacement d'un appareil électrique amovible défaillant.

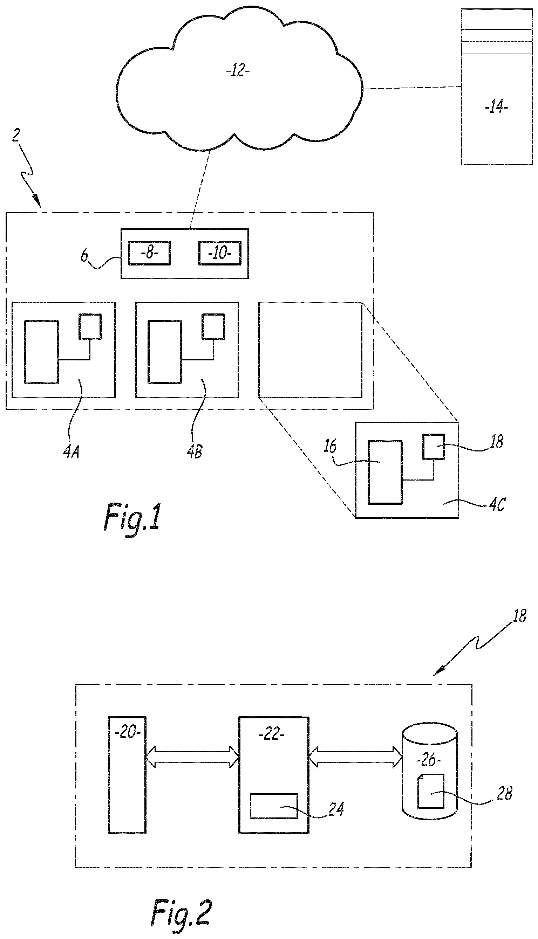

La figure 1 représente un système électrique 2 comprenant des appareils électriques amovibles 4A, 4B, 4C.

Le système 2 est ici associé à une installation électrique, par exemple en milieu industriel, telle qu'un réseau de distribution électrique pour alimenter plusieurs appareils de puissance. Par exemple, le système 2 est un tableau électrique ou une armoire électrique.

Par « amovible », on entend ici que chaque appareil électrique 4A, 4B, 4C est déplaçable par rapport au système 2, de façon réversible, entre une position connectée dans laquelle il est connecté au système 2 et une position retirée dans laquelle il est déconnecté du système 2. Sur la figure 1, les appareils 4A et 4B sont illustrés dans leur position connectée et l'appareil 4C est illustré dans la position retirée.

Selon un mode de réalisation, le système 2 comporte des logements, chacun adapté pour recevoir un appareil 4A, 4B, 4C, ainsi que des moyens de guidage et de fixation pour faciliter le déplacement des appareils 4A, 4B, 4C ainsi que leur maintien dans la position connectée. Par exemple, les appareils 4A, 4B, 4C sont déplaçables en translation. Par exemple, les appareils 4A, 4B, 4C sont déplaçables en translation. Les appareils peuvent aussi être montés sur un rail tout en étant amovible.

Les appareils électriques 4A, 4B, 4C sont, par exemple, des appareils de protection et de commutation électrique, tels que des disjoncteurs. En variante, il peut s'agit de contacteurs, ou d'appareils de mesure d'une ou plusieurs grandeurs électriques, ou d'un appareil de supervision du fonctionnement de l'installation électrique.

Ces appareils électriques 4A, 4B, 4C sont ici décrits au nombre de trois et sont ici identiques entre eux, ceci dans un but de simplification. Toutefois, en pratique, le nombre d'appareils amovibles 4A, 4B, 4C peut être différent.

De même, ces appareils amovibles 4A, 4B, 4C ne sont pas nécessairement identiques entre eux et peuvent être différent. Par exemple, un même système 2 peut recevoir des appareils amovibles 4A, 4B, 4C de nature différente, par exemple un disjoncteur et un dispositif de mesure d'une grandeur électrique.

Le système 2 comprend en outre un module électronique de gestion 6 comportant un calculateur électronique programmable 8 et une interface utilisateur 10.

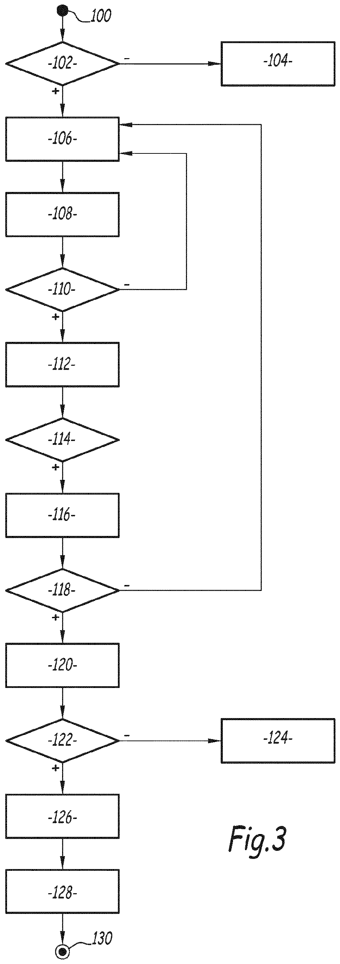

Par exemple, le calculateur 8 comprend une unité de calcul logique, telle qu'un microprocesseur ou un microcontrôleur, ainsi qu'un support d'enregistrement d'informations, tel qu'une mémoire informatique, de préférence non volatile, connectés entre eux. Le support d'enregistrement d'informations comporte des instructions exécutables pour assurer le fonctionnement du module de gestion 6, notamment pour mettre en oeuvre le procédé de la figure 3 décrit ci-après.

L'interface 10 comporte ici un écran électronique, par exemple de type à cristaux liquides ou, en variante, à plasma ou à diodes organiques luminescentes. Cet écran électronique est adapté pour afficher des informations à destination d'un opérateur. L'interface 10 comprend aussi des moyens de saisie de données, comme un clavier ou un écran tactile.

Selon d'autres modes de mise en œuvre, l'interface 10 est physiquement déportée par rapport au système 2. Par exemple, l'interface 10 est installée à distance du système 2 tout en étant connectée à ce dernier. En variante, l'interface 10 peut se présenter sous le forme d'un site internet accessible au moyen d'un ordinateur ou d'un dispositif de communication mobile du type tablette ou téléphone portable.

Le module 6 comporte également une interface de communications, telle qu'une interface réseau, mettre en place une liaison de données 12 avec un ou plusieurs équipements informatiques distants. Par exemple, la liaison 12 est réalisée au moyen d'un réseau de communications 12, tel qu'un réseau local de communication de type LAN, pour « Local Area Network » en langue anglaise.

En particulier, la liaison 12 permet au module 6 de se connecter à un serveur informatique 14 qui est adapté pour jouer le rôle d'autorité de certification, comme décrit ci-après. Le serveur 14, aussi nommé autorité de certification (CA), forme ainsi un tiers de confiance connu du système 2.

Les appareils 4A, 4B, 4C sont chacun pourvus d'un dispositif électrique commandable 16 et d'un calculateur électronique 18 embarqué configuré pour assurer des fonctions de commande et de gestion à distance du dispositif 16.

Le dispositif 16 est notamment destiné à être connecté à une ou plusieurs lignes de puissance acheminant un courant électrique. Le dispositif 16 constitue en fait le cœur de l'appareil 4A, 4B, 4C et lui permet d'assurer ses fonctions.

Dans cet exemple, comme les appareils 4A, 4B, 4C sont des disjoncteurs, alors le dispositif 16 est un appareillage électromécanique de coupure d'un courant électrique, comprenant notamment un bloc de coupure à contacts séparables ainsi qu'un mécanisme de déclenchement de ce bloc de coupure.

En variante, si les appareils 4A, 4B, 4C ont une fonction différente de celle d'un disjoncteur, alors le dispositif 16 est modifié en conséquence.

Lorsque l'appareil 4A, 4B, 4C est dans la position connectée avec le système 2, alors le dispositif 16 est connecté à l'installation électrique associée au système 2, par exemple par l'intermédiaire d'un ou plusieurs conducteurs de puissance, non illustrés, ménagés au sein du système 2.

De façon analogue, lorsque l'appareil 4A, 4B, 4C est dans la position connectée avec le système 2 le calculateur 18 est apte à communiquer avec le module de commande 6, par exemple au moyen d'un bus de données filaire, non illustré, ménagé au sein du système 2.

Comme illustré à la figure 2, le calculateur 18 comporte ici une interface 20 d'entrées/sorties de données, une unité de calcul logique 22, une unité cryptographique 24 et une mémoire informatique 26.

L'unité de calcul 22 comporte ici un microcontrôleur programmable ou un microprocesseur.

L'unité cryptographique 24 est un élément de calcul sécurisé, aussi connu sous le nom de cryptoprocesseur ou « trusted platform module » en langue anglaise. L'unité 24 est notamment apte à générer et stocker, de façon sécurisée, une clé cryptographique privée, par exemple pour implémenter un mécanisme de signature à clé publique.

En variante, l'unité cryptographique 24 est omise.

La mémoire 26 stocke des instructions exécutables pour assurer le fonctionnement de l'appareil 4A, 4B, 4C. Elle contient ici également un certificat de sécurité 28 qui permet une authentification individuelle de l'appareil 4A, 4B, 4C.

Par exemple, le certificat de sécurité 28 comporte plusieurs champs contenant chacun une donnée, parmi lesquelles, à titre indicatif, peuvent figurer un numéro de série identifiant l'appareil 4A, 4B, 4C de façon unique, un numéro de version logicielle, le nom de l'émetteur du certificat, des dates de validité du certificat, la référence de l'algorithme utilisé pour signer le certificat. Selon un exemple, le certificat 28 fourni par défaut est un certificat usine installé par le fabricant de l'appareil.

Dans cet exemple, l'autorité de certification 14 fait partie d'une chaîne de confiance qui regroupe, ici suivant une hiérarchie en arborescence, plusieurs autorités de certification. Par exemple, la chaîne de confiance comprend une autorité racine, à laquelle sont rattachées une ou plusieurs autorités de certification de rang inférieur. A chacune de ces autorités de certification est rattachée une ou plusieurs autres autorités de certification d'un rang encore inférieur, et ainsi de suite. Chaque autorité de confiance est habilitée à signer les certificats de sécurité des autorités de certification qui dépendent d'elle. Une telle chaîne de confiance est connue et n'est de fait pas décrite plus en détail.

Par exemple, un premier niveau de la chaîne de confiance correspond à une autorité racine associée à une organisation, telle qu'une entreprise. Le niveau immédiatement inférieur correspond à des divisions de cette organisation. Le niveau encore inférieur correspond à des sites géographiques rattachés à ces divisions, comme par exemple des sites de production.

Un exemple de mise en œuvre d'un procédé de remplacement d'un des appareils 4A, 4B ou 4C est maintenant décrit en référence à l'ordinogramme de la figure 3 et à l'aide des figures 1 et 2.

Initialement, les appareils 4A, 4B et 4C sont connectés avec le système 2 et sont dans un état de fonctionnement. Par exemple, les appareils 4A, 4B et 4C sont connectés sur un même réseau. Puis, l'un de ces appareils, par exemple l'appareil 4C, subit une défaillance et cesse de fonctionner normalement, de sorte qu'il doit être remplacé par un autre exemplaire d'appareil amovible du même type.

Avantageusement, le module de commande 6 est configuré pour détecter la défaillance de l'appareil 4C, par exemple en détectant automatiquement une perte de liaison de communication entre le calculateur embarqué 18 de l'appareil électrique amovible 4C et le module de commande 6 alors même que l'appareil 4C est toujours dans la position connectée, par exemple en étant reçu dans son logement au sein du système 2. Cette détection peut être réalisée avec l'aide d'un capteur de position installé dans le logement du système 2.

Le remplacement doit alors être effectué par un opérateur, manuellement, en retirant l'appareil 4C défectueux hors du système 2, puis en installant, à la place, un nouvel exemplaire de cet appareil 4C, ci-après dénommé « nouvel appareil amovible ». Lors de cette installation, le nouvel appareil 4C est amené vers la position connecté de manière à être connecté avec le système 2.

Toutefois, pour des raisons de sécurité, le module de commande 6 n'autorise pas l'intégration fonctionnelle du nouvel appareil 4C dans le système tant que ce nouvel appareil 4C n'a pas été inscrit au sein du système 2, afin de vérifier son authenticité.

Pour ce faire, le module 6 met en oeuvre le procédé automatique d'inscription décrit à la figure 3. Ce procédé débute par une étape d'initialisation 100. Par exemple, cette étape 100 démarre suite à une requête émise par l'opérateur sur l'interface 10 du module 6.

Avantageusement, l'étape 100 d'initialisation ne peut être mise en oeuvre que si le module 6 a précédemment détecté la défaillance de l'appareil défaillant. Cela permet d'éviter qu'un opérateur puisse installer un nouvel appareil sans raison valable à la place d'un appareil en cours de fonctionnement normal puis ensuite demander à inscrire ce nouvel appareil au sein du système 2.

Le procédé comporte ensuite une étape 102 d'authentification de l'opérateur. Par exemple, le module 6 envoie automatiquement à l'opérateur, par l'interface 10, une invitation à fournir un identifiant prédéfini, par exemple formé d'un nom d'utilisateur et un mot de passe. En réponse, l'opérateur doit fournir cet identifiant.

Le module acquiert alors l'identifiant fourni par l'opérateur sur l'interface 10, puis le compare avec une liste d'identifiants autorisés à réaliser des opérations de maintenance.

Si l'identifiant acquis ne correspond pas à un identifiant prédéfini préalablement autorisé, alors, lors d'une étape 104, l'opérateur n'est pas considéré comme authentifié et le procédé d'inscription est arrêté.

Au contraire, si l'identifiant acquis correspond à un identifiant prédéfini préalablement autorisé, alors, lors d'une étape 106, l'opérateur est considéré comme authentifié.

Ensuite, lors d'une étape 108, le module 6 accorde à l'opérateur l'autorisation de remplacer l'appareil défaillant. Par exemple, cette autorisation est donnée après que l'opérateur ait été authentifié et après qu'il ait émis une requête de remplacer l'appareil, ici sur l'interface 10.

Une fois que l'opérateur a procédé au remplacement de l'appareil défaillant par le nouvel appareil 4C, alors le module 6 vérifie automatiquement, lors d'une étape 110, si le nouvel appareil 4C a bien été connecté au système 2. Par exemple, le module 6 essaye de se connecter à l'interface 20 du calculateur embarqué 18, au moyen du bus de donnes du système 2.

Si le nouvel appareil 4C n'est pas détecté à l'issue de cette vérification, alors le remplacement est considéré comme ayant échoué et le nouvel appareil 4C doit à son tour être remplacé par l'opérateur. Par exemple, le procédé retourne à l'étape 108.

Dans le cas contraire, si le nouvel appareil 4C est correctement détecté à l'issue de l'étape 110, alors, lors d'une étape 112, le module 6 se connecte au calculateur 18 pour récupérer le certificat 28 contenu dans la mémoire 26 du calculateur 18. Par exemple, le module 6 envoie une requête au contrôleur 18 pour que ce dernier transmette le certificat 28 vers le module 6. Ce certificat 28 est alors stocké dans le support d'enregistrement d'informations du calculateur 8 du module 6.

Cette connexion peut être ici réalisée au moyen d'une liaison sécurisée, par exemple suivant un protocole de connexion sécurisé de type TLS, pour « transport security layer » en langue anglaise. Toutefois, cela n'est pas indispensable mais dans ce cas une procédure permettra avantageusement de vérifier que le produit est bien le processeur de la clé privée associé au certificat usine, par exemple un aléa généré par le module 6 et signé par le nouvel appareil 4C.

Avantageusement, au cours de cette étape 112, le module 6 ne récupère pas le certificat 28 tant que l'opérateur n'en a pas préalablement donné l'autorisation, par exemple au moyen de l'interface 10.

En effet, à ce stade, le nouvel appareil 4C contient un certificat standard, dit certificat d'usine, qui n'est pas reconnu par le système 2 comme étant un certificat de confiance car il n'émane pas de l'autorité de certification 14 à laquelle le système 2 fait confiance. Toutefois, ce certificat d'usine émane d'une autorité connue et qui est ici rattachée à l'autorité de certification par une chaîne de confiance. Par exemple, ce certificat d'usine émane du fabriquant de l'appareil 4C. Dans cet exemple, ce certificat d'usine est aussi nommé « premier certificat de sécurité ». En d'autres termes, le premier certificat est signé par une autorité connue du système 2. Toutefois, à ce stade, le module 6 ne sait pas que ce premier certificat est signé par une autorité connue.

Lors d'une étape 114, l'authenticité du certificat 28 acquis est automatiquement vérifiée par le module 6. Cette vérification peut être réalisée, avec l'aide d'une autorité de certification à laquelle le module 6 a confiance, en l'occurrence, ici, le serveur 14.

Par exemple, le module 6 extrait la signature du certificat 28 et vérifie auprès de l'autorité 14 ou avec le certificat du fabricant, par l'intermédiaire de la liaison 12, si cette signature correspond à une autorité de certification qui est liée par une chaîne de confiance à une autorité de certification racine connue.

Alternativement, cette vérification est réalisée par l'utilisation d'informations embarquée dans l'appareil 4C, telle que le certificat public de l'entité qui a émis et signé le certificat usine du produit. Le but est de vérifier que l'appareil 4C émane bien du fabricant. Le fabricant fournit le certificat public correspondant. En d'autres termes, cette vérification est réalisée en utilisant un certificat public de l'entité qui a émis le premier certificat, ce certificat public étant détenu par le système 2.

En pratique, l'utilisation d'un certificat public garantissant l'authenticité du certificat usine est préférable lorsqu'une liaison sécurisée 12 vers l'autorité 14 n'est pas disponible. Pour ce faire, le certificat public du fabricant est préférablement installé dans le module 6. Il y est par exemple installé uniquement par une personne disposant d'autorisations adéquates.

Si l'authenticité du certificat d'usine 28 ne peut pas être vérifiée, ou si la vérification conduit à une conclusion négative, alors le certificat n'est pas authentifié et l'inscription du nouvel appareil 4C est refusée. L'appareil 4C ne peut pas fonctionner au sein du système 2, quand bien même il est installé physiquement sur le système 2.

Dans le cas contraire, si l'authenticité du certificat d'usine 28 est validée à l'issue de cette étape 114, alors, avantageusement, lors d'une étape 116, des informations d'identification contenues dans le certificat d'usine 28 sont acquises par le module 6, par exemple en lisant le contenu du ou des champs de données correspondants.

Les informations d'identification permettent notamment d'identifier la nature de l'appareil 4C. Par exemple, les informations d'identification comportent une référence de produit qui identifie de façon unique l'appareil 4C ou tout au moins le type de l'appareil 4C. Dans cet exemple, les informations d'identification comportent un numéro de série du nouvel appareil 4C. Ce numéro de série peut être accompagné d'un numéro de version logicielle du système d'exploitation utilisé par le calculateur embarqué 18.

Alors, lors d'une étape 118, le module 6 vérifie automatiquement si l'appareil 4C est du même type que l'appareil défaillant qui a été remplacé. Cette vérification est réalisée à partir des informations d'identification acquises lors de l'étape 116. Par exemple, ces informations d'identification sont comparées avec des informations de référence enregistrées par le module 6.

Si, à l'issue de cette étape 118, le nouvel appareil 4C est identifié comme ne correspondant pas à l'appareil défaillant qui a été remplacé, alors le remplacement de l'appareil défaillant est considéré comme ayant échoué et le nouvel appareil 4C doit être remplacé par l'opérateur. Par exemple, le procédé retourne à l'étape 108.

Au contraire, si le nouvel appareil 4C est identifié comme correspondant à l'appareil défaillant, alors l'appareil défaillant est considéré comme ayant été physiquement installé. Toutefois, à ce stade, le nouvel appareil 4C n'est pas fonctionnellement intégré dans le système 2. Avantageusement, lors de l'étape 120, une confirmation que l'appareil a été installé physiquement est envoyée à l'opérateur, par l'intermédiaire de l'interface 10.

Ensuite, lors d'une étape 122, le module 4C génère une clé pour former un nouveau certificat.

Dans ce qui suit, ce certificat et cette clé forment un deuxième certificat de sécurité, aussi dénommé « nouveau certificat » dans ce qui suit. Ce deuxième certificat étant distinct du premier certificat de sécurité ou certificat d'usine.

Dans cet exemple, le deuxième certificat est créé automatiquement par le calculateur 18 à partir des informations contenues dans le premier certificat, dont il reprend au moins les informations d'identification. Ce nouveau certificat de sécurité, et notamment la clé, sont de préférence générés par l'unité cryptographique 26 du calculateur 6. En variante, toutefois, lorsque cette unité 26 est omise, alors le deuxième certificat est généré par l'unité de calcul 22.

Le deuxième certificat diffère notamment du premier certificat en ce qu'il n'est, à ce stade, pas signé par une autorité de certification connue du système 2.

Ensuite, une requête est envoyée pour que ce nouveau certificat soit signé par l'autorité 14.

Par exemple, cette requête est générée et envoyée par l'appareil 4C. La requête peut être relayée par le module 6. En variante, l'appareil 4C ne passe pas par le module 6 pour envoyer cette requête, par exemple s'il dispose d'un accès au serveur 14.

En réponse à cette requête, si l'autorité de certification 14 considère qu'elle peut signer ce deuxième certificat, alors elle le signe puis le renvoie au module 6 ou à l'appareil 4C.

Si le deuxième certificat signé n'est pas reçu dans un laps de temps prédéfini, par exemple à cause d'une défaillance de la liaison 12, ou parce que l'autorité 14 n'est pas en mesure de signer le deuxième certificat, alors le procédé d'inscription est automatiquement arrêté lors d'une étape 124.

Au contraire, si le deuxième certificat signé est correctement reçu par le module 6 ou par l'appareil 4C, alors, lors d'une étape 126, l'appareil 4C utilise ce deuxième certificat signé à la place du certificat d'usine. Le nouvel appareil 4C est alors considéré comme étant inscrit au sein du système 2 et peut fonctionner normalement au sein de ce système 2.

En d'autres termes, à l'issue de l'inscription, le certificat d'usine du nouvel appareil 4C est remplacé par un deuxième certificat de sécurité, signé par l'autorité de certification locale connue du système 2 et à laquelle le système 2 fait confiance.

Cela indique que l'authenticité du nouvel appareil 4C est reconnue.

De façon avantageuse, lors d'une étape 128 postérieure à l'étape 126, le certificat du module défectueux qui a été remplacé est révoqué auprès de l'autorité de certification 14, une fois que le nouvel appareil électrique amovible 4C est inscrit au sein du système 2. Cette révocation est ici demandée par le module 6 en envoyant une requête à cet effet à destination de l'autorité 14 au moyen de la liaison 12. Puis tous les éléments du système sont informés que le certificat est révoqué donc non utilisable.

Cela permet d'éviter que l'appareil défaillant ayant été remplacé ne puisse être réintégré dans le système 2 ou dans un autre système électrique qui utilise la même chaîne de confiance.

Le procédé d'inscription se termine lors d'une étape finale 130.

Avantageusement, à l'issue de cette étape 130, le module 6 fournit automatiquement au calculateur 18 des paramètres de configuration prédéfinis. Ces paramètres sont par exemple enregistrés dans le calculateur 8 et correspondent à des paramètres de fonctionnement utilisés par l'ancien appareil.

Grâce à l'invention, l'utilisation de certificats de sécurité propres à chaque appareil amovible, associés à une autorité de certification de confiance, permet à un opérateur de maintenance chargé du remplacement d'un appareil défaillant d'inscrire l'appareil venant d'être installé en remplacement d'un appareil défaillant, sans pour autant avoir besoin de disposer de permissions de sécurité élevées. L'inscription des appareils amovibles au sein du système lors de leur remplacement s'en trouve facilité, sans pour autant compromettre la sécurité informatique de l'ensemble du système.

Le procédé décrit ci-dessus peut être avantageusement mis en oeuvre pour remplacer simultanément plusieurs appareils amovibles défaillants au sein d'un même système 2. Les étapes décrites ci-dessus sont alors réitérées pour chacun des appareils remplacés.

Un problème peut toutefois se poser lorsque les appareils défaillants sont similaires entre eux, par exemple d'un même modèle et ayant une même fonction. Alors, l'étape 118 peut être modifiée de sorte à permettre au système 2 de savoir lequel des appareils défaillants a été remplacé. Par exemple, l'opérateur est invité à saisir, sur l'interface 10, un identifiant désignant l'appareil qu'il vient de remplacer. Ces informations sont enregistrées dans un journal de suivi par le module 6, accompagnées d'une information d'horodatage et de l'identifiant de l'opérateur, de sorte à assurer une traçabilité de l'opération en cas de problème ultérieur.

Les modes de réalisation et les variantes envisagés ci-dessus peuvent être combinés entre eux pour générer de nouveaux modes de réalisation. nouvel appareil 4C. Ce numéro de série peut être accompagné d'un numéro de version logicielle du système d'exploitation utilisé par le calculateur embarqué 18.

Alors, lors d'une étape 118, le module 6 vérifie automatiquement si l'appareil 4C est du même type que l'appareil défaillant qui a été remplacé. Cette vérification est réalisée à partir des informations d'identification acquises lors de l'étape 116. Par exemple, ces informations d'identification sont comparées avec des informations de référence enregistrées par le module 6.

Si, à l'issue de cette étape 118, le nouvel appareil 4C est identifié comme ne correspondant pas à l'appareil défaillant qui a été remplacé, alors le remplacement de l'appareil défaillant est considéré comme ayant échoué et le nouvel appareil 4C doit être remplacé par l'opérateur. Par exemple, le procédé retourne à l'étape 108.

Au contraire, si le nouvel appareil 4C est identifié comme correspondant à l'appareil défaillant, alors l'appareil défaillant est considéré comme ayant été physiquement installé. Toutefois, à ce stade, le nouvel appareil 4C n'est pas fonctionnellement intégré dans le système 2. Avantageusement, lors de l'étape 120, une confirmation que l'appareil a été installé physiquement est envoyée à l'opérateur, par l'intermédiaire de l'interface 10.

Ensuite, lors d'une étape 122, le module 4C génère une clé pour former un nouveau certificat.

Dans ce qui suit, ce certificat et cette clé forment un deuxième certificat de sécurité, aussi dénommé « nouveau certificat » dans ce qui suit. Ce deuxième certificat étant distinct du premier certificat de sécurité ou certificat d'usine.

Dans cet exemple, le deuxième certificat est créé automatiquement par le calculateur 18 à partir des informations contenues dans le premier certificat, dont il reprend au moins les informations d'identification. Ce nouveau certificat de sécurité, et notamment la clé, sont de préférence générés par l'unité cryptographique 26 du calculateur 6. En variante, toutefois, lorsque cette unité 26 est omise, alors le deuxième certificat est généré par l'unité de calcul 22.

Le deuxième certificat diffère notamment du premier certificat en ce qu'il n'est, à ce stade, pas signé par une autorité de certification connue du système 2.

Ensuite, une requête est envoyée pour que ce nouveau certificat soit signé par l'autorité 14.

Par exemple, cette requête est générée et envoyée par l'appareil 4C. La requête peut être relayée par le module 6. En variante, l'appareil 4C ne passe pas par le module 6 pour envoyer cette requête, par exemple s'il dispose d'un accès au serveur 14.

En réponse à cette requête, si l'autorité de certification 14 considère qu'elle peut signer ce deuxième certificat, alors elle le signe puis le renvoie au module 6 ou à l'appareil 4C.

Si le deuxième certificat signé n'est pas reçu dans un laps de temps prédéfini, par exemple à cause d'une défaillance de la liaison 12, ou parce que l'autorité 14 n'est pas en mesure de signer le deuxième certificat, alors le procédé d'inscription est automatiquement arrêté lors d'une étape 124.

Au contraire, si le deuxième certificat signé est correctement reçu par le module 6 ou par l'appareil 4C, alors, lors d'une étape 126, l'appareil 4C utilise ce deuxième certificat signé à la place du certificat d'usine. Le nouvel appareil 4C est alors considéré comme étant inscrit au sein du système 2 et peut fonctionner normalement au sein de ce système 2.

En d'autres termes, à l'issue de l'inscription, le certificat d'usine du nouvel appareil 4C est remplacé par un deuxième certificat de sécurité, signé par l'autorité de certification locale connue du système 2 et à laquelle le système 2 fait confiance.

Cela indique que l'authenticité du nouvel appareil 4C est reconnue.

De façon avantageuse, lors d'une étape 128 postérieure à l'étape 126, le premier certificat de sécurité, c'est-à-dire le certificat du module défectueux qui a été remplacé, est révoqué auprès de l'autorité de certification 14, une fois que le nouvel appareil électrique amovible 4C est inscrit au sein du système 2. Cette révocation est ici demandée par le module 6 en envoyant une requête à cet effet à destination de l'autorité 14 au moyen de la liaison 12. Puis tous les éléments du système sont informés que le certificat est révoqué donc non utilisable.

Cela permet d'éviter que l'appareil défaillant ayant été remplacé ne puisse être réintégré dans le système 2 ou dans un autre système électrique qui utilise la même chaîne de confiance.

Le procédé d'inscription se termine lors d'une étape finale 130.

Avantageusement, à l'issue de cette étape 130, le module 6 fournit automatiquement au calculateur 18 des paramètres de configuration prédéfinis. Ces paramètres sont par exemple enregistrés dans le calculateur 8 et correspondent à des paramètres de fonctionnement utilisés par l'ancien appareil.

Grâce à l'invention, l'utilisation de certificats de sécurité propres à chaque appareil amovible, associés à une autorité de certification de confiance, permet à un opérateur de maintenance chargé du remplacement d'un appareil défaillant d'inscrire l'appareil venant d'être installé en remplacement d'un appareil défaillant, sans pour autant avoir besoin de disposer de permissions de sécurité élevées. L'inscription des appareils amovibles au sein du système lors de leur remplacement s'en trouve facilité, sans pour autant compromettre la sécurité informatique de l'ensemble du système.

Le procédé décrit ci-dessus peut être avantageusement mis en œuvre pour remplacer simultanément plusieurs appareils amovibles défaillants au sein d'un même système 2. Les étapes décrites ci-dessus sont alors réitérées pour chacun des appareils remplacés.

Un problème peut toutefois se poser lorsque les appareils défaillants sont similaires entre eux, par exemple d'un même modèle et ayant une même fonction. Alors, l'étape 118 peut être modifiée de sorte à permettre au système 2 de savoir lequel des appareils défaillants a été remplacé. Par exemple, l'opérateur est invité à saisir, sur l'interface 10, un identifiant désignant l'appareil qu'il vient de remplacer. Ces informations sont enregistrées dans un journal de suivi par le module 6, accompagnées d'une information d'horodatage et de l'identifiant de l'opérateur, de sorte à assurer une traçabilité de l'opération en cas de problème ultérieur.

Les modes de réalisation et les variantes envisagés ci-dessus peuvent être combinés entre eux pour générer de nouveaux modes de réalisation.

## Revendications

1. Procédé d'inscription sécurisée d'un appareil électrique amovible (4A, 4B, 4C) lors de son installation au sein d'un système électrique (2) en remplacement d'un appareil électrique amovible défaillant, **caractérisé en ce que** ce procédé comporte des étapes consistant à :
- détecter une défaillance d'un appareil électrique amovible (4A, 4B, 4C) installé au sein d'un système électrique (2) associé à une installation électrique, l'appareil électrique étant un appareil de protection et de commutation électrique, ou un contacteur, ou un appareil de mesure d'une ou plusieurs grandeurs électriques, ou un appareil de supervision du fonctionnement de l'installation électrique ;
puis, uniquement si un appareil électrique amovible (4A, 4B, 4C) installé au sein du système électrique (2) a été détecté comme étant défaillant :
a) postérieurement à l'installation d'un nouvel appareil électrique amovible (4A, 4B, 4C) au sein d'un système électrique (2) pour remplacer l'appareil électrique amovible défaillant de ce système électrique, acquérir (112) automatiquement, au moyen d'un module électronique de commande (6) du système électrique (2), un premier certificat de sécurité (28) du nouvel appareil électrique amovible stocké dans une mémoire informatique (26) d'un calculateur électronique (18) embarqué du nouvel appareil électrique amovible (4A, 4B, 4C), ce premier certificat étant signé par une autorité connue du système (2) ;
e) vérifier (118) à partir d'informations d'identification contenues dans le premier certificat de sécurité (28) acquis que le nouvel appareil électrique amovible (4A, 4B, 4C) est du même type que l'appareil défaillant qui a été remplacé, l'inscription du nouvel appareil électrique amovible (4A, 4B, 4C) étant refusée si ce nouvel appareil électrique amovible (4A, 4B, 4C) n'est pas identifié comme correspondant à l'appareil électrique amovible défaillant qu'il remplace au sein du système électrique (2) ;
b) vérifier (114) l'authenticité du premier certificat de sécurité acquis, cette vérification étant effectuée par le module électronique de commande (6) ;
c) générer un deuxième certificat de sécurité (28) du nouvel appareil électrique amovible (4A, 4B, 4C), ce deuxième certificat de sécurité comportant une clé générée par le calculateur électronique (18) du nouvel appareil électrique amovible (4A, 4B, 4C) ;
d) obtenir (126) une signature du deuxième certificat de sécurité auprès d'une autorité de certification de confiance (14), le nouvel appareil électrique amovible (4A, 4B, 4C) étant ensuite inscrit au sein du système électrique seulement si cette signature est obtenue ;
f) révoquer (128) le certificat de l'appareil électrique qui a été remplacé auprès de l'autorité de certification (14), une fois que le nouvel appareil électrique amovible (4A, 4B, 4C) est inscrit au sein du système électrique à l'issue de l'étape d) ;
et **en ce que** l'étape de détection d'une défaillance comporte la détection d'une perte de liaison de communication entre le calculateur embarqué (18) de l'appareil électrique amovible (4A, 4B, 4C) et le module de commande (6) du système électrique (2).

2. Procédé selon la revendication 1, **caractérisé en ce que** lors de l'étape b), la vérification est réalisée en utilisant un certificat public de l'entité qui a émis le premier certificat, ce certificat public étant détenu par le système (2).

3. Procédé selon la revendication 1, **caractérisé en ce que** lors de l'étape b), la vérification est réalisée auprès de l'autorité de certification de confiance (14).

4. Procédé selon l'une quelconque des revendications précédentes, **caractérisé en ce que** qu'il comporte en outre, avant l'étape a), des étapes consistant à :
y) acquérir (100) une requête d'inscription émise par un opérateur, depuis une interface utilisateur (10) du module de commande (6) ;
z) en réponse, authentifier (102) l'opérateur en acquérant un identifiant fourni par l'opérateur sur l'interface utilisateur (10), l'opérateur n'étant considéré comme authentifié que si l'identifiant acquis correspond à un identifiant prédéfini préalablement autorisé, les étapes a) à d) n'étant pas mises en œuvre si l'opérateur n'est pas authentifié à l'issue de cette étape z).

5. Procédé selon l'une quelconque des revendications précédentes, **caractérisé en ce qu'**il comporte une étape de génération du deuxième certificat de sécurité, par le calculateur électronique (18) embarqué de l'appareil électrique amovible (4A, 4B, 4C).

6. Procédé selon la revendication 5, **caractérisé en ce que** le deuxième certificat de sécurité est généré par une unité cryptographique (24) du calculateur électronique (18) embarqué de l'appareil électrique amovible (4A, 4B, 4C).

7. Procédé selon l'une quelconque des revendications précédentes **caractérisé en ce qu'**il comprend une étape consistant à remplacer physiquement l' appareil électrique amovible (4A, 4B, 4C) défaillant du système électrique (2) par le nouvel appareil électrique amovible (4A, 4B, 4C),.

8. Système électrique (2) comprenant au moins un appareil électrique amovible (4A, 4B, 4C) pourvu d'un calculateur électronique embarqué (18), ce système électrique (2) comprenant un module électronique de commande (6), **caractérisé en ce que** le module électronique de commande (6) est programmé pour mettre en œuvre des étapes consistant à :
- détecter une défaillance d'un appareil électrique amovible (4A, 4B, 4C) installé au sein du système électrique (2), l'étape de détection d'une défaillance comportant la détection d'une perte de liaison de communication entre un calculateur embarqué (18) de l'appareil électrique amovible (4A, 4B, 4C) et le module de commande (6) du système électrique (2), le système électrique étant associé à une installation électrique, l'appareil électrique étant un appareil de protection et de commutation électrique, ou un contacteur, ou un appareil de mesure d'une ou plusieurs grandeurs électriques, ou un appareil de supervision du fonctionnement de l'installation électrique ;
puis, uniquement si un appareil électrique amovible (4A, 4B, 4C) installé au sein du système électrique (2) a été détecté comme étant défaillant :
a) postérieurement à l'installation d'un nouvel appareil électrique amovible (4A, 4B, 4C) au sein d'un système électrique (2) pour remplacer l'appareil électrique amovible défaillant de ce système électrique, acquérir (112) automatiquement un premier certificat de sécurité (28) du nouvel appareil électrique amovible stocké dans une mémoire informatique (26) du calculateur électronique (18) embarqué du nouvel appareil électrique amovible (4A, 4B, 4C), ce premier certificat étant signé par une autorité connue du système (2) ;
e) vérifier (118) à partir d'informations d'identification contenues dans le premier certificat de sécurité (28) que le nouvel appareil électrique amovible (4A, 4B, 4C) est du même type que l'appareil défaillant qui a été remplacé, l'inscription du nouvel appareil électrique amovible (4A, 4B, 4C) étant refusée si ce nouvel appareil électrique amovible (4A, 4B, 4C) n'est pas identifié comme correspondant à l'appareil électrique amovible défaillant qu'il remplace au sein du système électrique (2) ;
b) vérifier (114) de l'authenticité du premier certificat de sécurité acquis, cette vérification étant effectuée par le module électronique de commande (6);
c) générer un deuxième certificat de sécurité (28) du nouvel appareil électrique amovible (4A, 4B, 4C), ce deuxième certificat de sécurité comportant une clé générée par le calculateur électronique (18) du nouvel appareil électrique amovible (4A, 4B, 4C) ;
d) obtenir (126) une signature du deuxième certificat de sécurité auprès d'une autorité de certification de confiance (14), le nouvel appareil électrique amovible (4A, 4B, 4C) étant ensuite inscrit au sein du système électrique seulement si cette signature est obtenue ;
f) révoquer (128) le certificat de l'appareil électrique qui a été remplacé auprès de l'autorité de certification (14), une fois que le nouvel appareil électrique amovible (4A, 4B, 4C) est inscrit au sein du système électrique à l'issue de l'étape d).

## Patentansprüche

1. Verfahren zur gesicherten Anmeldung eines abnehmbaren elektrischen Geräts (4A, 4B, 4C) bei seiner Installation innerhalb eines elektrischen Systems (2) als Ersatz für ein ausgefallenes abnehmbares elektrisches Gerät, **dadurch gekennzeichnet, dass** dieses Verfahren Schritte umfasst, die aus Folgendem bestehen:
- Erkennen eines Ausfalls eines abnehmbaren elektrischen Geräts (4A, 4B, 4C), das innerhalb eines elektrischen Systems (2) installiert ist, das mit einer elektrischen Anlage assoziiert ist, wobei das elektrische Gerät ein elektrisches Schutz- und Schaltgerät oder ein Schütz oder ein Gerät zum Messen einer oder mehrerer elektrischer Größen oder ein Gerät zum Überwachen des Betriebs der elektrischen Anlage ist;
dann, nur wenn ein entfernbares elektrisches Gerät (4A, 4B, 4C), das innerhalb des elektrischen Systems (2) installiert ist, als ausgefallen erkannt wurde:
a) nach der Installation eines neuen abnehmbaren elektrischen Geräts (4A, 4B, 4C) innerhalb eines elektrischen Systems (2), um das ausgefallene abnehmbare elektrische Gerät dieses elektrischen Systems zu ersetzen, automatisches Erwerben (112), mittels eines elektronischen Steuermoduls (6) des elektrischen Systems (2) eines ersten Sicherheitszertifikats (28) des neuen abnehmbaren elektrischen Geräts, das in einem Informatikspeicher (26) eines elektronischen Rechners (18) an Bord des neuen abnehmbaren elektrischen Geräts (4A, 4B, 4C) gespeichert ist, wobei dieses erste Zertifikat von einer dem System (2) bekannten Autorität unterzeichnet ist;
e) Verifizieren (118) anhand von Identifikationsinformationen, die in dem erworbenen ersten Sicherheitszertifikat (28) enthalten sind, dass das neue abnehmbare elektrische Gerät (4A, 4B, 4C) vom selben Typ ist wie das ausgefallene Gerät, das ersetzt wurde, wobei die Registrierung des neuen abnehmbaren elektrischen Geräts (4A, 4B, 4C) verweigert wird, wenn dieses neue abnehmbare elektrische Gerät (4A, 4B, 4C) nicht so identifiziert wird, dass es dem ausgefallenen abnehmbaren elektrischen Gerät entspricht, das es innerhalb des elektrischen Systems (2) ersetzt;
b) Verifizieren (114) der Authentizität des ersten erworbenen Sicherheitszertifikats, wobei diese Verifizierung durch das elektronische Steuermodul (6) ausgeführt wird;
c) Erzeugen eines zweiten Sicherheitszertifikats (28) des neuen abnehmbaren elektrischen Geräts (4A, 4B, 4C), wobei das zweite Sicherheitszertifikat einen von dem elektronischen Rechner (18) des neuen abnehmbaren elektrischen Geräts (4A, 4B, 4C) erzeugten Schlüssel enthält;
d) Erlangen (126) einer Signatur des zweiten Sicherheitszertifikats von einer vertrauenswürdigen Zertifizierungsstelle (14), wobei das neue abnehmbare elektrische Gerät (4A, 4B, 4C) dann nur dann innerhalb des elektrischen Systems registriert wird, wenn diese Signatur erlangt wird;
f) Widerrufen (128) des Zertifikats des elektrischen Geräts, das ersetzt wurde, bei der Zertifizierungsstelle (14), sobald das neue abnehmbare elektrische Gerät (4A, 4B, 4C) nach Schritt d) in dem elektrischen System registriert ist;
und dass der Schritt eines Erkennens eines Ausfalls das Erkennen eines Verlusts der Kommunikationsverbindung zwischen dem Bordrechner (18) des abnehmbaren elektrischen Geräts (4A, 4B, 4C) und dem Steuermodul (6) des elektrischen Systems (2) umfasst.

2. Verfahren nach Anspruch 1, **dadurch gekennzeichnet, dass** in Schritt b) die Verifizierung unter Verwendung eines öffentlichen Zertifikats der Entität ausgeführt wird, die das erste Zertifikat ausgestellt hat, wobei dieses öffentliche Zertifikat von dem System (2) gehalten wird.

3. Verfahren nach Anspruch 1, **dadurch gekennzeichnet, dass** in Schritt b) die Verifizierung bei der vertrauenswürdigen Zertifizierungsstelle (14) ausgeführt wird.

4. Verfahren nach einem der vorherigen Ansprüche, **dadurch gekennzeichnet, dass** es vor Schritt a) ferner Schritte umfasst, die aus Folgendem bestehen:
y) Erfassen (100) einer Registrierungsanfrage, die von einem Bediener von einer Benutzerschnittstelle (10) des Steuermoduls (6) ausgegeben wird;
z) als Reaktion darauf Authentifizieren (102) des Bedieners durch Erfassen einer von dem Bediener auf der Benutzerschnittstelle (10) bereitgestellten Kennung, wobei der Bediener nur dann als authentifiziert gilt, wenn die erfasste Kennung mit einer vordefinierten, zuvor autorisierten Kennung übereinstimmt, wobei die Schritte a) bis d) nicht durchgeführt werden, wenn der Bediener nach diesem Schritt z) nicht authentifiziert ist.

5. Verfahren nach einem der vorherigen Ansprüche, **dadurch gekennzeichnet, dass** es einen Schritt zum Erzeugen des zweiten Sicherheitszertifikats durch den elektronischen Rechner (18) an Bord des abnehmbaren elektrischen Geräts (4A, 4B, 4C) umfasst.

6. Verfahren nach Anspruch 5, **dadurch gekennzeichnet, dass** das zweite Sicherheitszertifikat von einer kryptographischen Einheit (24) des elektronischen Rechners (18) an Bord des abnehmbaren elektrischen Geräts (4A, 4B, 4C) erzeugt wird.

7. Verfahren nach einem der vorherigen Ansprüche, **dadurch gekennzeichnet, dass** es einen Schritt umfasst, der darin besteht, das ausgefallene abnehmbare elektrische Gerät (4A, 4B, 4C) des elektrischen Systems (2) physisch durch das neue abnehmbare elektrische Gerät (4A, 4B, 4C) zu ersetzen,

8. Elektrisches System (2), umfassend mindestens ein abnehmbares elektrisches Gerät (4A, 4B, 4C), das mit einem elektronischen Bordcomputer (18) versehen ist, wobei das elektrische System (2) ein elektronisches Steuermodul (6) aufweist, **dadurch gekennzeichnet, dass** das elektronische Steuermodul (6) programmiert ist, um Schritte durchzuführen, die aus Folgendem bestehen:
- Erkennen eines Ausfalls eines abnehmbaren elektrischen Geräts (4A, 4B, 4C), das innerhalb des elektrischen Systems (2) installiert ist, wobei der Schritt zum Erkennen eines Ausfalls ein Erkennen eines Verlusts der Kommunikationsverbindung zwischen einem Bordrechner (18) des abnehmbaren elektrischen Geräts (4A, 4B, 4C) und dem Steuermodul (6) des elektrischen Systems (2) umfasst, wobei das elektrische System mit einer elektrischen Anlage verbunden ist, wobei das elektrische Gerät ein elektrisches Schutz- und Schaltgerät oder ein Schütz oder ein Gerät zum Messen einer oder mehrerer elektrischer Größen oder ein Gerät zum Überwachen des Betriebs der elektrischen Anlage ist;
dann, nur wenn ein entfernbares elektrisches Gerät (4A, 4B, 4C), das innerhalb des elektrischen Systems (2) installiert ist, als ausgefallen erkannt wurde:
a) nach der Installation eines neuen abnehmbaren elektrischen Geräts (4A, 4B, 4C) innerhalb eines elektrischen Systems (2), um das ausgefallene abnehmbare elektrische Gerät dieses elektrischen Systems zu ersetzen, automatisches Erwerben (112) eines ersten Sicherheitszertifikats (28) des neuen abnehmbaren elektrischen Geräts, das in einem Informatikspeicher (26) des elektronischen Rechners (18) an Bord des neuen abnehmbaren elektrischen Geräts (4A, 4B, 4C) gespeichert ist, wobei dieses erste Zertifikat von einer dem System (2) bekannten Autorität unterzeichnet ist;
e) Verifizieren (118) anhand von Identifikationsinformationen, die in dem ersten Sicherheitszertifikat (28) enthalten sind, dass das neue abnehmbare elektrische Gerät (4A, 4B, 4C) vom selben Typ ist wie das ausgefallene Gerät, das ersetzt wurde, wobei die Registrierung des neuen abnehmbaren elektrischen Geräts (4A, 4B, 4C) verweigert wird, wenn dieses neue abnehmbare elektrische Gerät (4A, 4B, 4C) nicht so identifiziert wird, dass es dem ausgefallenen abnehmbaren elektrischen Gerät entspricht, das es innerhalb des elektrischen Systems (2) ersetzt;
b) Verifizieren (114) der Authentizität des ersten erworbenen Sicherheitszertifikats, wobei diese Verifizierung durch das elektronische Steuermodul (6) ausgeführt wird;
c) Erzeugen eines zweiten Sicherheitszertifikats (28) des neuen abnehmbaren elektrischen Geräts (4A, 4B, 4C), wobei das zweite Sicherheitszertifikat einen von dem elektronischen Rechner (18) des neuen abnehmbaren elektrischen Geräts (4A, 4B, 4C) erzeugten Schlüssel enthält;
d) Erlangen (126) einer Signatur des zweiten Sicherheitszertifikats von einer vertrauenswürdigen Zertifizierungsstelle (14), wobei das neue abnehmbare elektrische Gerät (4A, 4B, 4C) dann nur dann innerhalb des elektrischen Systems registriert wird, wenn diese Signatur erlangt wird;
f) Widerrufen (128) des Zertifikats des elektrischen Geräts, das ersetzt wurde, bei der Zertifizierungsstelle (14), sobald das neue abnehmbare elektrische Gerät (4A, 4B, 4C) nach Schritt d) in dem elektrischen System registriert ist;

## Claims

1. A method of securely registering a removable electrical apparatus (4A, 4B, 4C) when it is installed in an electrical system (2) as a replacement for a failed removable electrical apparatus, **characterised in that** the method comprises the steps of:
- detecting a failure of a removable electrical apparatus (4A, 4B, 4C) installed within an electrical system (2) associated with an electrical installation, the electrical apparatus being an electrical protection and switching apparatus, or a contactor, or an apparatus for measuring one or more electrical quantities, or an apparatus for monitoring the operation of the electrical installation;
then, only if a removable electrical apparatus (4A, 4B, 4C) installed within the electrical system (2) has been detected as having failed:
a) following the installation of a new removable electrical apparatus (4A, 4B, 4C) within an electrical system (2) to replace the failed removable electrical apparatus of this electrical system, automatically acquiring (112), by means of an electronic control module (6) of the electrical system (2), a first security certificate (28) of the new removable electrical apparatus stored in a computer memory (26) of an on-board electronic computer (18) of the new removable electrical apparatus (4A, 4B, 4C), this first certificate being signed by an authority known to the system (2);
e) verifying (118) from identification information contained in the first acquired safety certificate (28) that the new removable electrical apparatus (4A, 4B, 4C) is of the same type as the failed apparatus that has been replaced, the registration of the new removable electrical apparatus (4A, 4B, 4C) being denied if this new removable electrical apparatus (4A, 4B, 4C) is not identified as corresponding to the failed removable electrical apparatus which it replaces within the electrical system (2);
b) verifying (114) the authenticity of the first acquired security certificate, this verification being performed by the electronic control module (6);
c) generating a second security certificate (28) for the new removable electrical apparatus (4A, 4B, 4C), this second security certificate comprising a key generated by the electronic computer (18) of the new removable electrical apparatus (4A, 4B, 4C);
d) obtaining (126) a signature of the second security certificate from a trusted certification authority (14), the new removable electrical apparatus (4A, 4B, 4C) then being registered within the electrical system only if that signature is obtained;
f) revoking (128) the certificate of the electrical apparatus that has been replaced with the certification authority (14), once the new removable electrical apparatus (4A, 4B, 4C) is registered within the electrical system after step d);
and **in that** the step of detecting a failure comprises detecting a loss of communication link between the on-board computer (18) of the removable electrical apparatus (4A, 4B, 4C) and the control module (6) of the electrical system (2).

2. The method according to claim 1, **characterised in that** in step b) the verification is performed using a public certificate of the entity that issued the first certificate, this public certificate being held by the system (2).

3. The method according to claim 1, **characterised in that** in step b) the verification is carried out with the trusted certification authority (14).

4. The method according to any one of the preceding claims, **characterised in that** it further comprises, before step a), steps consisting of:
y) acquiring (100) a registration request from an operator from a user interface (10) of the control module (6);
z) in response, authenticating (102) the operator by acquiring an identifier provided by the operator on the user interface (10), the operator being considered authenticated only if the acquired identifier corresponds to a previously authorised predefined identifier, steps a) to d) not being implemented if the operator is not authenticated after this step z).

5. The method according to any one of the preceding claims, **characterized in that** it comprises a step of generating the second security certificate by the on-board electronic computer (18) of the removable electrical apparatus (4A, 4B, 4C).

6. The method according to claim 5, **characterised in that** the second security certificate is generated by a cryptographic unit (24) of the on-board electronic computer (18) of the removable electrical apparatus (4A, 4B, 4C).

7. The method according to any one of the preceding claims, **characterised in that** it comprises a step of physically replacing the failed removable electrical apparatus (4A, 4B, 4C) of the electrical system (2) with the new removable electrical apparatus (4A, 4B, 4C),

8. An electrical system (2) comprising at least one removable electrical apparatus (4A, 4B, 4C) provided with an on-board electronic computer (18), said electrical system (2) comprising an electronic control module (6), **characterised in that** the electronic control module (6) is programmed to implement steps consisting of:
- detecting a failure of a removable electrical apparatus (4A, 4B, 4C) installed within the electrical system (2), the step of detecting a failure comprising the detection of a loss of communication link between an on-board computer (18) of the removable electrical apparatus (4A, 4B, 4C) and the control module (6) of the electrical system (2) the electrical system being associated with an electrical installation, the electrical apparatus being an electrical protection and switching apparatus, or a contactor, or an apparatus for measuring one or more electrical quantities, or an apparatus for monitoring the operation of the electrical installation;
then, only if a removable electrical apparatus (4A, 4B, 4C) installed within the electrical system (2) has been detected as having failed:
a) following the installation of a new removable electrical apparatus (4A, 4B, 4C) within an electrical system (2) to replace the failed removable electrical apparatus of this electrical system, automatically acquiring (112) a first security certificate (28) of the new removable electrical apparatus stored in a computer memory (26) of an on-board electronic computer (18) of the new removable electrical apparatus (4A, 4B, 4C), this first certificate being signed by an authority known to the system (2);
e) verifying (118) from identification information contained in the first acquired safety certificate (28) that the new removable electrical apparatus (4A, 4B, 4C) is of the same type as the failed apparatus that has been replaced, the registration of the new removable electrical apparatus (4A, 4B, 4C) being denied if this new removable electrical apparatus (4A, 4B, 4C) is not identified as corresponding to the failed removable electrical apparatus which it replaces within the electrical system (2);
b) verifying (114) the authenticity of the first acquired security certificate, this verification being performed by the electronic control module (6);
c) generating a second security certificate (28) for the new removable electrical apparatus (4A, 4B, 4C), this second security certificate comprising a key generated by the electronic computer (18) of the new removable electrical apparatus (4A, 4B, 4C);
d) obtaining (126) a signature of the second security certificate from a trusted certification authority (14), the new removable electrical apparatus (4A, 4B, 4C) then being registered within the electrical system only if that signature is obtained;
f) revoking (128) the certificate of the electrical apparatus that has been replaced with the certification authority (14), once the new removable electrical apparatus (4A, 4B, 4C) is registered within the electrical system after step d).
